# EUROPEAN PATENT SPECIFICATION

(11) **EP 3 405 025 B1**
(45) Date of publication and mention of the grant of the patent: **10.04.2024**
(21) Application number: 17700857.0
(22) Date of filing: 23.01.2017
(51) Int. Cl.: A01K 31/18, A01K 31/00, A01K 39/014, A01K 41/00, A01K 45/00, A01K 31/19

(54) **METHOD OF FEEDING HATCHED CHICKS IN A CLIMATE CHAMBER**
VERFAHREN ZUR FÜTTERUNG VON GESCHLÜPFTEN KÜKEN IN EINER KLIMAKAMMER
PROCÉDÉ D'ALIMENTATION DE POUSSINS ÉCLOS DANS UNE CHAMBRE CLIMATISÉE

(30) Priority: 21.01.2016 NL 2016135
(43) Date of publication of application: 28.11.2018
(73) Proprietor: HatchTech Group B.V., 3905 TB Veenendaal (NL)
(72) Inventor: METER, Tjitze, 3903 DH Veenendaal (NL)
(74) Representative: Nederlandsch Octrooibureau
(86) International application number: PCT/EP2017/051271
(87) International publication number: WO 2017/125596

(56) References cited:
- EP-A1- 1 310 163
- WO-A1-02/34039
- WO-A1-2011/133020
- GB-A- 2 489 994
- US-A- 3 396 703
- Anonymous: "Raising Chickens/Chicks - Wikibooks, open books for an open world", , 8 September 2015 (2015-09-08), XP055581079, Retrieved from the Internet: URL:https://web.archive.org/web/2015090807 0901/https://en.wikibooks.org/wiki/Raising _Chickens/Chicks [retrieved on 2019-04-15]

## Description

### Background

The present invention relates to a method of feeding newly hatched chicks in a climate chamber during a first stage of life from hatching, the method comprising;
a) controlling the temperature and humidity in the climate chamber,
b) operating a ventilation means to generate an air flow through the climate chamber.

Such a climate chamber is known from WO2011/133020 A1.

### Summary of the invention

The invention aims to provide a more natural start for young chicks in an industrial environment like a climate chamber.

Another object of the invention is to improve a method of feeding newly hatched chicks in a climate chamber in that a problem with known methods is at least partly solved.

Yet another object of the invention is to provide an alternative method of feeding newly hatched chicks in a climate chamber.

According to a first aspect of the invention this is realized with a method according to claim 1.

The supplying of the newly hatched chicks with self moving live feed in the climate chamber stimulates natural behaviour of the young chicks. This will result in an improved quality of the young chicks. This improved quality will have a positive effect during the rest of the life of the chick.

In an embodiment of the invention, the self moving live feed comprises insects and/or worms. In particular the self moving live feed comprises one or more of the group earthworms, larvae, silkworms, mealworms and combinations thereof. Conceivable types of insects are black soldier fly larvae, housefly larvae, silkworms, and yellow mealworms.

In other words, the live feed comprises living insects and/or living worms. This is attractive for the chickens at least because these living insects and living worms are self moving as perceived by the newly hatched chicken. Living insects and living worms are examples of self moving live feed. In general, the self moving live feed stimules natural behaviour of the young chicks. Therefore, food intake is improved.

In an embodiment of the invention, the first stage of life comprises the first 1 to 4 days of life and the method comprises;
d) transferring newly hatched chicks to the climate chamber within the first 1 to 4 days of life before supplying the newly hatched chicks with live feed in the climate chamber.

In an embodiment of the invention, the climate chamber is transportable and the method comprises;
e) performing step c) during transport of the climate chamber.

Supplying the newly hatched chicks with self moving live feed in the climate chamber during transport improves chick quality even during transport of the chicks. Transport steps between a hatchery and a breeding farm normally have a negative effect on animal wellbeing.

In an embodiment of the invention, the method comprises;
f) transferring newly hatched chicks to the transportable climate chamber.

In an embodiment of the invention, the method comprises before performing step c);
g) arranging eggs in the climate chamber, and
h) incubating the eggs in the climate chamber till hatching occurs.

This is even more beneficial for chick quality since handling of eggs and/or newly hatched chicks is reduced to a minimum.

In an embodiment of the invention, the climate chamber comprises a climate chamber compartment and at least step c) is performed in the climate chamber compartment. The division of the climate chamber into compartments helps to industrialize and standardize the process steps of the method.

In an embodiment of the invention, the climate chamber comprises a crate for accommodating a group of young chicken, like a group consisting of 40 to 100 young chicken wherein the step c) comprises supplying the newly hatched chicks with self moving live feed in the crate and wherein the crate is preferably arranged in the climate chamber compartment. This even more helps to industrialize and standardize the process steps of the method. In addition, it reduces handling of individual eggs and/or newly hatched chicks.

In an embodiment of the invention, the climate chamber comprises one or more troughs and step c) comprises containing the live feed in the one or more troughs.

In an embodiment of the invention, the one or more troughs comprises means for maintaining the live feed contained in the one or more troughs. This prevents unwanted spread of live feed through the climate chamber. These means are desireable since the live feed may want to climb out of the trough.

As will be clear, climbing out of the trough of the live feed is possible because the live feed is self moving live feed.

In an embodiment of the invention, the means for maintaining the live feed contained in the one or more troughs comprises one or more selected from a grating, an edge with a sloped section, a concave section as seen from an interior of the trough, an edible enclosure that surrounds the live feed, and a trough interior surface having a surface structure to impede climbing of live feed out of the trough. The sloped section hinders climbing of live feed out of the trough. The surface structure that impedes climbing out of the trough may differ between types of live feed.

In an embodiment of the invention, the crate is provided with ventilation openings on two opposite sides of the crate in order to allow the air flow through the climate chamber to pass the crate.

In an embodiment of the invention, the method further comprises i) providing a stack of a number of said crates.

In an embodiment of the invention, the climate chamber comprises a feed supply conduit coupled with crates, in particular all of the number of crates, and step c) comprises transport of live feed through the feed supply conduit. This facilitates the supply of live feed to all chicks in the climate chamber.

In an embodiment of the invention, at least one side of the climate chamber or the at least one chamber compartment is delimited by a heat exchanger. In particular the climate chamber comprises at least two of said chamber compartments which are separated from one another by the heat exchanger. The heat exchanger helps to control the temperature in a chamber compartment by exchange of heat between the exchanger and the air flow through the climate chamber.

The present disclosure further relates to a climate chamber for rearing newly hatched chicks, the climate chamber comprising one or more troughs having means for maintaining live feed contained in the one or more troughs. This reduces the possibility of unwanted spread of live feed through the climate chamber.

In an embodiment of the climate chamber, the means for maintaining the live feed contained in the one or more troughs comprises one or more selected from a grating, an edge with a sloped section, a concave section as seen from an interior of the trough, an edible enclosure that surrounds the live feed, and a trough interior surface having a surface structure to impede climbing of live feed out of the trough.

In an embodiment the climate chamber contains chicks and the at least one or more troughs contains live feed.

In an embodiment the climate chamber comprises a crate for accommodating a group of young chicken, and the at least one or more troughs is arranged within the crate and forms part of the crate. It will be clear that within the crate may include a trough that is partly within the outline of the crate. The trough is part of the crate and accesible from within the crate. It is however also conceivable that the trough is part of the climate chamber and accesible from within the crate.

The present disclosure further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention relates to hatching and feeding of newly hatched birds in a controlled environment during their first one or two days or some days thereafter. Industry practice is to provide newly hatched birds with no additional food at all. Occasionnaly, food may be provided that however may not be perceived as attractive in a natural way to the newly hatched birds.

According to the invention, newly hatched birds are provided with self moving live feed, like mealworms. This type of feed leads to more natural environment as perceived by the bird.

The invention will be further elucidated referring to the drawings wherein shown in:
Fig. 1 in perspective view a climate chamber for hatching chicks according to the method of the invention;
fig. 2 a cross sectional side view of a crate for use in the climate chamber of fig. 1;
fig. 3a and 3b embodiments of the trough, of the crate according to fig. 2;
fig. 4 a stack of crates for use in the climate chamber of fig. 1;
fig. 5 a side view of transportable climate chamber;
fig. 6 a stack of another embodiment of crates;
fig. 7-10; different embodiments of a trough for use in a crate of fig. 2 of 6.

### Detailed description of embodiments

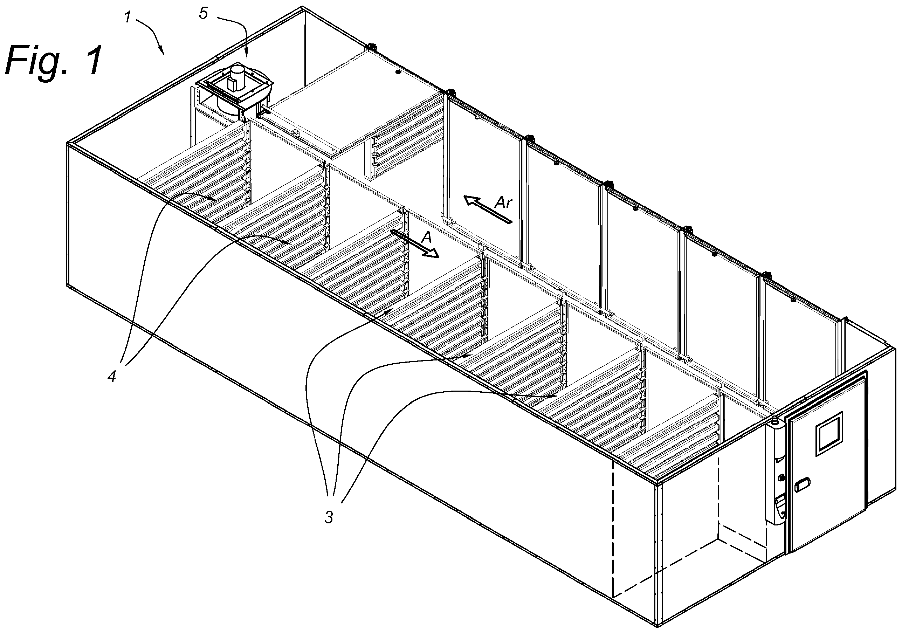

Fig. 1 shows in perspective view a climate chamber 1 for hatching chicks 3 according to the method of the invention. The climate chamber 1 is configured to control the temperature and humidity in the climate chamber such that newly hatched chicks can be fed in the climate chamber 1. The climate chamber 1 comprises a ventilation means 5 to generate an air flow A, Ar through the climate chamber 1.

The climate chamber 1 has a bottom wall, a top wall (not shown), a front and rear side wall and a first and a second end wall that enclose the interior of the climate chamber 1 to allow a recirculating air flow. The climate chamber 1 comprises a number of heat exchangers 3 for heating or cooling the climate chamber 1. The temperature of the climate chamber is controlled through heat exchange between the air flow and the heat exchangers 3. The heat exchangers 3 are air-permeable to allow the air flow to pass the heat exchangers 3.

Here, the climate chamber 1 is subdivided into climate chamber compartments 4. The air flow A flows from the ventilations means 5 through all climate chamber compartments 4 and returns through a corridor or passageway back to the ventilation means 4. Such a climate chamber compartment 4 is configured to match the dimensions of a stack 13 of crates 2. Such a stack 13 is normally handled with a trolley (not shown).

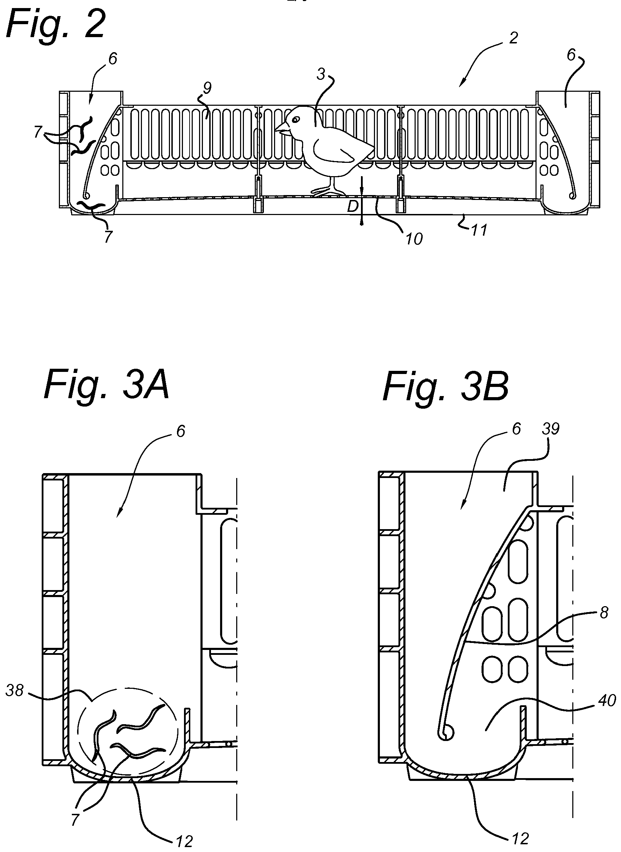

Fig. 2 shows a cross sectional side view of a crate 2 for use in the climate chamber 1 of fig. 1. The crate 2 is configured for accommodating a group of young chicken 3, like a group consisting of 40 to 100 young chicken. The crate 2 is stackable.

Therefore, the bottom face 11 can be placed on top of another crate 2. The chick 3 rests on a floor element 10. The crate 2 comprises a trough 6. Here, the crate 2 has two troughs 6. The two troughs are arranged at opposite sides of the crate 2. The trough 6 contains live feed 7 in order to supply the newly hatched chicks 4 with live feed 7 in the crate 2. The live feed may comprises insects and/or worms, in particular one or more of the group earthworms, larvae, silkworms, mealworms and combinations thereof.

Fig. 3a and 3b show each an embodiment of a trough 6 of the crate 2 according to fig. The trough 6 of fig. 3b is subdivided by a partition element 8. The partition element 8 divides the trough 6 such that there is an intake opening 39 for filling the trough and an outlet opening, different from the intake opening, from which outlet opening the chicks can take their food.

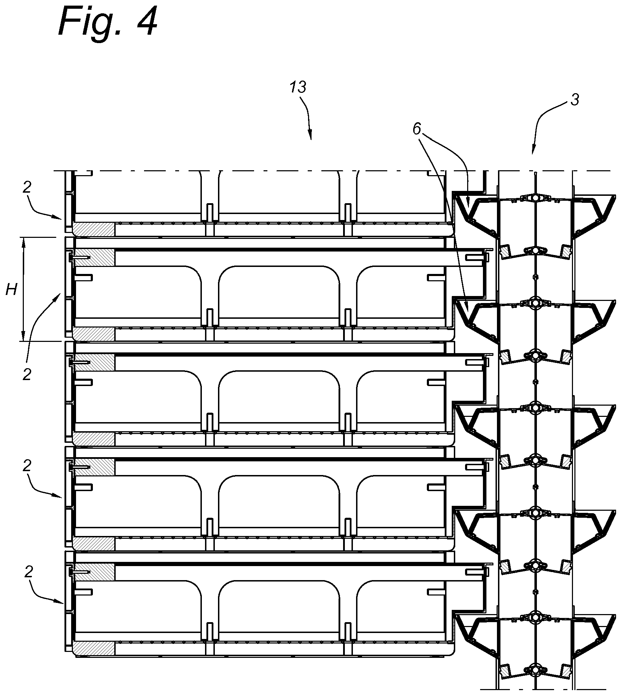

Fig. 4 shows a stack 13 of crates 2 for use in the climate chamber of fig. 1. In particular the stack 13 is placed in a climate chamber compartment 4. Here, the stack 13 adjoins a heat exchanger 3. In this case, the troughs 6 are arranged with the heat exchanger 3 and the troughs 6 are accessible by the chicks 3 from the interior of the crate 2.

The crates 2 shown in the figures 2 - 4 are used in the following way in the method of feeding hatched chicks 3 in a climate chamber 1 during a first stage of life from hatching. Hatched chicks 3 are placed in the interior of the crate 2. These newly hatched chicks are transferred to the climate chamber 1 by placing the crate 2, in particular a stach 13 of crates into the climate chamber 1. These newly hatched chicks are transferred to the climate chamber 1 within the first 1 to 4 days of life, in particular as soon as possible after hatching. The chicks 3 are supplied with live feed 7 in the climate chamber 1. Therefore, the live feed 7 is placed in troughs 6. The live feed 7 contains e.g. mealworms. These troughs can be part of the crate 2, see fig. 2-3, and/or part of the climate chamber 1, see fig. 4.

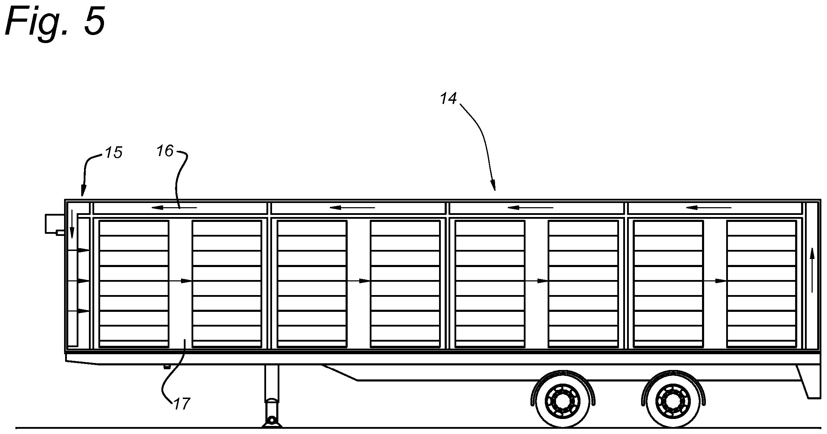

As an option the climate chamber is transportable. Fig. 5 shows a side view of a transportable climate chamber designed as a trailer 14. The trailer 14 comprises ventilation means 15 to drive an air flow 16 that runs through compartments and heat exchangers 17. The compartments and heat exchangers 17 are schematically shown.

In use, the trailer 14 travels while the interior of the trailer is filled with stacks of crates 2. It is conceivable that both type of crates 2 as shown in fig. 2-4 and fig. 6 can be transported with the trailer 14.

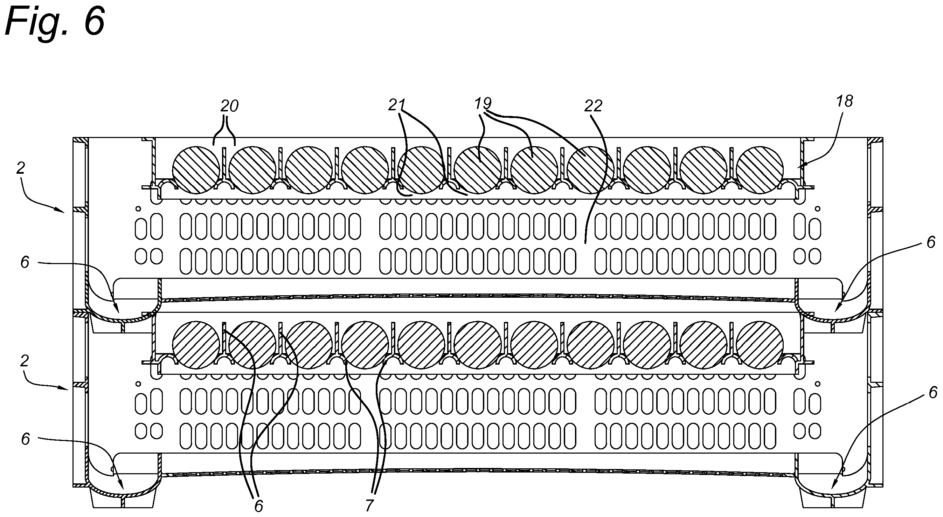

Fig. 6 shows a stack of another embodiment of crates 2. An egg tray 18 is shown in assembly with a crate 2. Here, a stack of two assemblies of a crate 2 and an egg tray 18 is depicted. The crate 2 provides a chicken accommodation space 22 for hatching and rearing chicken. The crate 2 comprises troughs 6 at opposite sides of the crate 2. The, here separate, egg tray 18 is arranged on top of the crate 2. The crate 2 has an open top such that a chicken may enter the chicken accommodation space 22 through a passage 21. The tray 18 contains a number of eggs 19. The tray 18 comprises a number of egg accommodation spaces 20. In this space 20 the eggs 19 are firmly held such that the eggs 19 may be hatched in a controlled manner. The tray 1 has a number of passages 21 for a chicken through which passage 21 a chicken hatched from an egg 19 may pass through the tray 18 and enter the chicken accommodation space 22 located below the tray 18.

The crates 2 shown in figure 6 differ in use with the crates 2 of figures 2-4 in that the chicks hatch directly above the crate 2 and make their own way into the interior 22 of the crate 2. Therefor, the step of transfer of newly hatched chicks from outside to the inside of the climate chamber 1 is not required. Instead, eggs are transferred into the inside of the climate chamber 1.

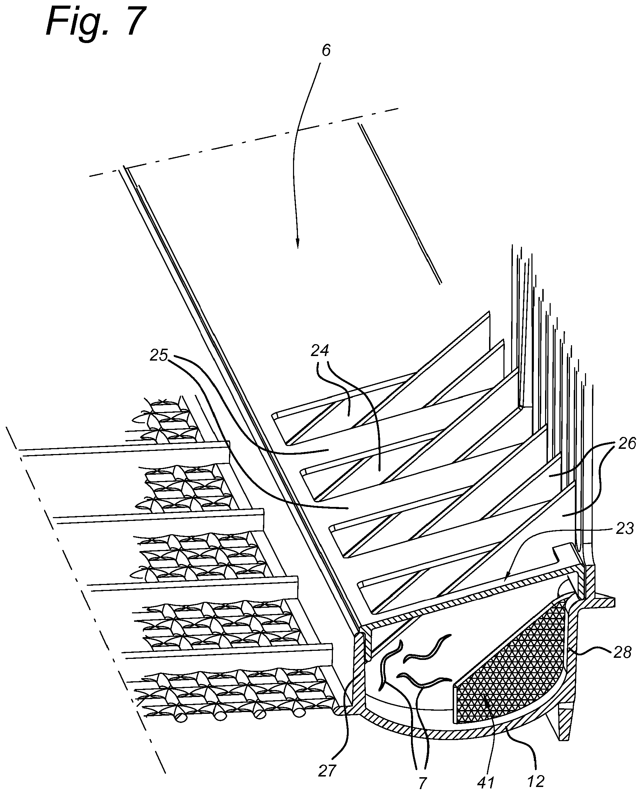

In fig. 7-10 different embodiments of a troughs for use in a crate of fig. 2 or 6 are shown. Al the troughs 6 have a bottom 12 to support the live feed 7, and an inner 27 and outer 28 side wall. Here, the trough 6 is subdivided by wall elements 26. All the troughs 6 comprise means for maintaining the live feed 7 contained in the trough 6. The troughs 6 differ in the type of means for maintaining the live feed 7 contained in the trough 6, as will be explained.

Fig. 7 shows a grating 23 to maintain the live feed 7 in the trough 6. The grating 23 has openings 24 and ribs 25 between the openings 24. As an example a wall elements 26 has a trough interior surface 41 having a surface structure to impede climbing of live feed out of the trough. The surface structure is schematically depicted and can be obtained for example when manufacturing the interior surface, or by tooling or coating the interior surface.

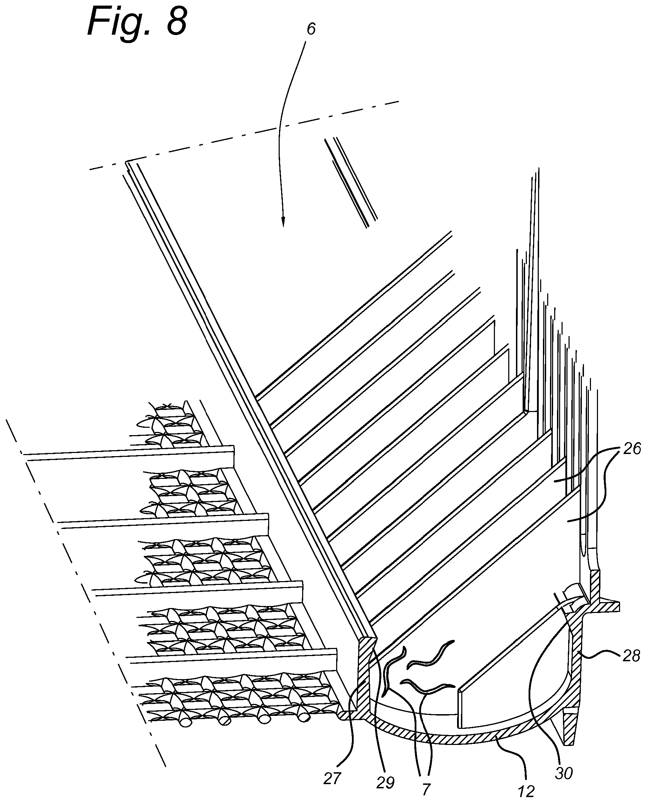

Fig 8 shows opposite trough walls 27, 28 each provided with a respective sloped section 29, 30 to maintain the live feed 7 in the trough 6. These sloped sections 29, 30 narrow the outlet opening 40.

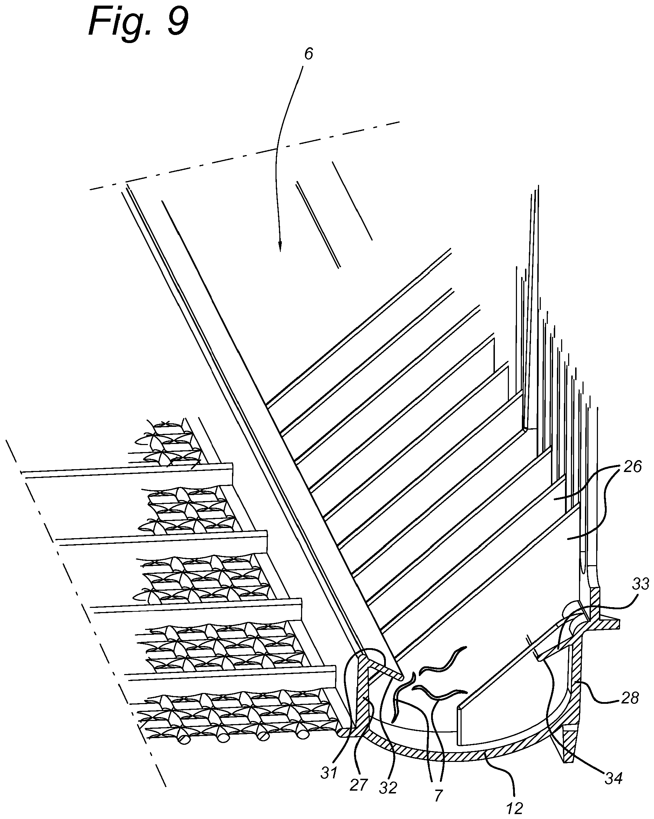

Fig 9 shows opposite trough walls 27, 28 each provided with a respective sloped section 32, 34 to maintain the live feed 7 in the trough 6. These sloped sections 32, 34 are arranged with a respective projection 31, 33.

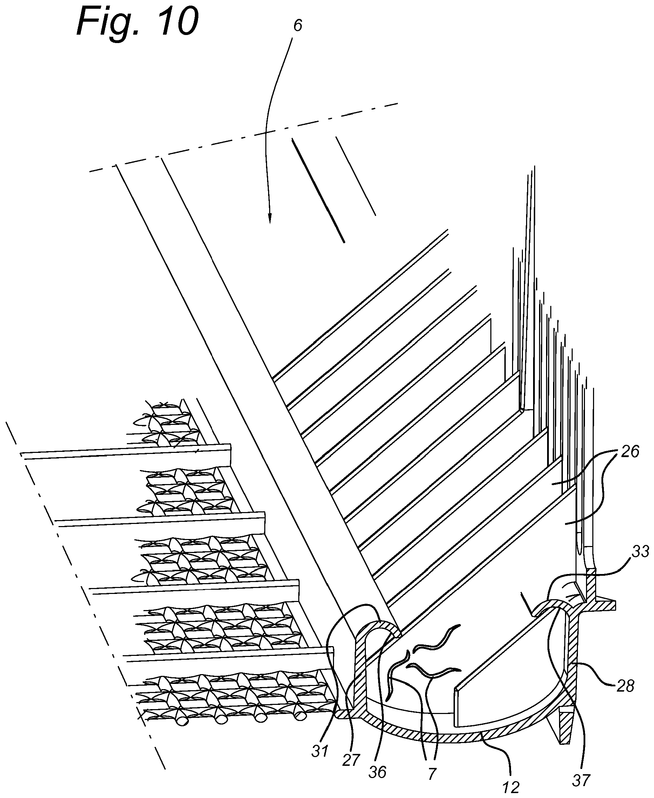

Fig 10 shows opposite trough walls 27, 28 each provided with a respective concave section (36, 37) as seen from an interior of the trough 6 to maintain the live feed 7 in the trough 6. These concave section 36, 37 are arranged with a respective projection 31, 33.

Fig 3A schematically shows as a dashed line an edible enclosure 38 that surrounds the live feed 7 to maintain the live feed 7 in the trough 6.

It will also be obvious after the above description and drawings are included to illustrate some embodiments of the invention, and not to limit the scope of protection as defined by the appended claims.

Starting from this disclosure, many more embodiments will be evident to a skilled person which are within the scope of protection as defined by the appended claims and which are obvious combinations of prior art techniques and the disclosure of this patent.

## Claims

1. Method of feeding newly hatched chicks (3) in an industrial environment in a climate chamber (1) during a first stage of life from hatching, the method comprising;
a) controlling the temperature and humidity in the climate chamber,
b) operating a ventilation means (5) to generate an air flow through the climate chamber, and
c) supplying the newly hatched chicks with self moving live feed (7) as perceived by the newly hatched chicken in the climate chamber,
wherein the first stage of life comprises the first 1 to 4 days of life.

2. Method according to claim 1, where the live feed comprises insects and/or worms.

3. Method according to claim 2, wherein the live feed comprises one or more of the group earthworms, larvae, silkworms, mealworms and combinations thereof.

4. Method according to a preceding claim, and wherein the method further comprises;
d) transferring the newly hatched chicks to the climate chamber within the first 1 to 4 days of life before supplying the newly hatched chicks with self moving live feed in the climate chamber.

5. Method according to a preceding claim, wherein the climate chamber is transportable and the method further comprises;
e) performing step c) during transport of the climate chamber, and in particular, transferring the newly hatched chicks to the transportable climate chamber.

6. Method according to a preceding claim, wherein the method further comprises before performing step c);
f) arranging eggs in the climate chamber, and
g) incubating the eggs in the climate chamber till hatching occurs.

7. Method according to a preceding claim, wherein the climate chamber comprises a climate chamber compartment (4) and at least step c) is performed in the climate chamber compartment.

8. Method according to claim 7 wherein the climate chamber comprises a crate (2) for accommodating a group of young chicken, like a group consisting of 40 to 100 young chicken, and wherein in particular the crate is arranged in the climate chamber compartment, and wherein the step c) comprises supplying the newly hatched chicks with live feed in the crate.

9. Method according to a preceding claim, wherein the climate chamber comprises one or more troughs (6) and step c) comprises containing the self moving live feed in the one or more troughs.

10. Method according to claim 9, wherein the one or more troughs comprises means (23) for maintaining the self moving live feed contained in the one or more troughs, and wherein in particular the means for maintaining the self moving live feed contained in the one or more troughs comprises one or more selected from a grating (23), an edge with a sloped section (29, 30, 32, 34), a concave section (36, 37) as seen from an interior of the trough, an edible enclosure (38) that surrounds the self moving live feed, and a trough interior surface (41) having a surface structure to impede climbing of self moving live feed out of the trough.

11. Method according to claim 8, or claim 9 or 10 when dependent on claim 8, wherein the crate is provided with ventilation openings (9) on two opposite sides of the crate in order to allow the air flow through the climate chamber to pass the crate.

12. Method according to claim 8, or any of claims 9-11 when dependent on claim 8, further comprising step i) providing a stack (13) of a number of said crates.

13. Method according to claim 8, or any of claims 9-12 when dependent on claim 8, wherein the climate chamber comprises a feed supply conduit coupled with crates, in particular all of the number of crates, and step c) comprises transport of self moving live feed through the feed supply conduit.

14. Method according to claim 7 or any of claims 8-13 when dependent on claim 7, wherein at least one side of the climate chamber or the at least one chamber compartment is delimited by a heat exchanger (3), and wherein in particular the climate chamber comprises at least two of said chamber compartments (4) which are separated from one another by the heat exchanger.

## Patentansprüche

1. Verfahren zum Füttern frisch geschlüpfter Küken (3) in einer Industrieumgebung in einer Klimakammer (1) während eines ersten Lebensabschnitts nach dem Schlüpfen, wobei das Verfahren Folgendes umfasst;
a) Steuern der Temperatur und Feuchtigkeit in der Klimakammer,
b) Betreiben einer Belüftungseinrichtung (5), um einen Luftstrom durch die Klimakammer zu erzeugen, und
c) Versorgen der frisch geschlüpften Küken mit sich selbst bewegendem Lebendfutter (7), wie es von den frisch geschlüpften Küken in der Klimakammer wahrgenommen wird,
wobei der erste Lebensabschnitt die ersten 1 bis 4 Lebenstage umfasst.

2. Verfahren nach Anspruch 1, wobei das Lebendfutter Insekten und/oder Würmer umfasst.

3. Verfahren nach Anspruch 2, wobei das Lebendfutter eine oder mehrere der Gruppen Regenwürmer, Larven, Seidenraupen, Mehlwürmer und Kombinationen davon umfasst.

4. Verfahren nach einem vorhergehenden Anspruch, wobei das Verfahren ferner Folgendes umfasst:
d) Überführen der frisch geschlüpften Küken in die Klimakammer innerhalb der ersten 1 bis 4 Lebenstage, bevor die frisch geschlüpften Küken in der Klimakammer mit sich selbst bewegendem Lebendfutter versorgt werden.

5. Verfahren nach einem vorhergehenden Anspruch, wobei die Klimakammer transportabel ist und das Verfahren ferner Folgendes umfasst;
e) Ausführen von Schritt c) während des Transports der Klimakammer, und insbesondere Überführen der frisch geschlüpften Küken in die transportable Klimakammer.

6. Verfahren nach einem vorhergehenden Anspruch, wobei das Verfahren vor dem Ausführen von Schritt c) ferner Folgendes umfasst;
f) Anordnen der Eier in der Klimakammer, und
g) Inkubieren der Eier in der Klimakammer bis das Schlüpfen erfolgt.

7. Verfahren nach einem vorhergehenden Anspruch, wobei die Klimakammer einen Klimakammerraum (4) umfasst und zumindest Schritt c) in dem Klimakammerraum ausgeführt wird.

8. Verfahren nach Anspruch 7, wobei die Klimakammer eine Kiste (2) zum Unterbringen einer Gruppe von Junghühnern umfasst, wie eine Gruppe bestehend aus 40 bis 100 Junghühnern, und wobei insbesondere die Kiste in dem Klimakammerraum angeordnet ist, und wobei der Schritt c) das Versorgen der frisch geschlüpften Küken mit Lebendfutter in der Kiste umfasst.

9. Verfahren nach einem vorhergehenden Anspruch, wobei die Klimakammer einen oder mehrere Tröge (6) umfasst und Schritt c) das Aufnehmen des sich selbst bewegenden Lebendfutters in dem einen oder den mehreren Trögen umfasst.

10. Verfahren nach Anspruch 9, wobei der eine oder die mehreren Tröge Mittel (23) zum Aufrechterhalten des sich selbst bewegenden Lebendfutters umfassen, das in dem einen oder den mehreren Trögen enthalten ist, und
wobei insbesondere die Mittel zum Aufrechterhalten des sich selbst bewegenden Lebendfutters, das in dem einen oder den mehreren Trögen enthalten ist, eines oder mehrere umfasst, ausgewählt aus einem Gitter (23), einer Kante mit einem geneigten Abschnitt (29, 30, 32, 34), einem konkaven Abschnitt (36, 37) von einem Inneren des Trogs aus gesehen, einer essbaren Hülle (38), die das sich selbst bewegende Lebendfutter umgibt, und einer Troginnenfläche (41) mit einer Oberflächenstruktur, um das Herausklettern des sich selbst bewegenden Lebendfutters aus dem Trog zu verhindern.

11. Verfahren nach Anspruch 8 oder Anspruch 9 oder 10 in Abhängigkeit von Anspruch 8,
wobei die Kiste an zwei gegenüberliegenden Seiten der Kiste mit Belüftungsöffnungen (9) versehen ist, damit der Luftstrom durch die Klimakammer die Kiste passieren kann.

12. Verfahren nach Anspruch 8 oder einem der Ansprüche 9-11 in Abhängigkeit von Anspruch 8, das ferner den Schritt i) des Bereitstellens eines Stapels (13) einer Anzahl der besagten Kisten umfasst.

13. Verfahren nach Anspruch 8 oder einem der Ansprüche 9-12 in Abhängigkeit von Anspruch 8,
wobei die Klimakammer eine Futterversorgungsleitung umfasst, die mit Kisten gekoppelt ist, insbesondere der gesamten Anzahl von Kisten, und wobei Schritt c) den Transport von sich selbst bewegendem Lebendfutter durch die Futterversorgungsleitung umfasst.

14. Verfahren nach Anspruch 7 oder einem der Ansprüche 8-13 in Abhängigkeit von Anspruch 7,
wobei zumindest eine Seite der Klimakammer oder des zumindest einen Kammerraums durch einen Wärmetauscher (3) begrenzt ist, und wobei insbesondere die Klimakammer zumindest zwei der besagten Kammerräume (4) umfasst, die durch den Wärmetauscher voneinander getrennt sind.

## Revendications

1. Procédé d'alimentation de poussins nouvellement éclos (3) dans un environnement industriel dans une chambre climatique (1) pendant une première étape de vie à partir de l'éclosion, le procédé comprenant:
a) contrôler la température et l'humidité dans la chambre climatique,
b) faire fonctionner un moyen de ventilation (5) pour générer un flux d'air à travers la chambre climatique, et
c) fournir aux poussins nouvellement éclos des aliments vivants automoteurs (7) comme perçus par le poulet nouvellement éclos dans la chambre climatique,
où la première étape de vie comprend les 1 à 4 premiers jours de vie.

2. Procédé selon la revendication 1, où les aliments vivants comprennent des insectes et/ou des vers.

3. Procédé selon la revendication 2, où les aliments vivants comprennent un ou plusieurs du groupe de vers de terre, de larves, de vers à soie, de vers de farine et des combinaisons de ceux-ci.

4. Procédé selon une revendication précédente, et où le procédé comprend en outre,
d) transférer les poussins nouvellement éclos vers la chambre climatique au cours des 1 à 4 premiers jours de vie avant de fournir aux poussins nouvellement éclos des aliments vivants automoteurs dans la chambre climatique.

5. Procédé selon une revendication précédente, où la chambre climatique est transportable et le procédé comprend en outre ;
e) effectuer l'étape c) pendant le transport de la chambre climatique, et en particulier transférer les poussins nouvellement éclos vers la chambre climatique transportable.

6. Procédé selon une revendication précédente, où le procédé comprend en outre avant d'effectuer l'étape c) ;
f) disposer les oeufs dans la chambre climatique, et
g) incuber les oeufs dans la chambre climatique jusqu'à ce que l'éclosion se produise.

7. Procédé selon une revendication précédente, où la chambre climatique comprend un compartiment de chambre climatique (4) et au moins l'étape c) est effectuée dans le compartiment de chambre climatique.

8. Procédé selon la revendication 7 où la chambre climatique comprend une caisse (2) pour accueillir un groupe de jeunes poulets, comme un groupe consistant en 40 à 100 jeunes poulets, et où en particulier la caisse est disposée dans le compartiment de la chambre climatique, et où l'étape c) comprend fournir aux poussins nouvellement éclos avec des aliments vivants dans la cage.

9. Procédé selon une revendication précédente, où la chambre climatique comprend une ou plusieurs mangeoires (6) et l'étape c) comprend contenir les aliments vivants automoteurs dans l'une ou plusieurs mangeoires.

10. Procédé selon la revendication 9, où l'une ou plusieurs mangeoires comprennent des moyens (23) pour maintenir les aliments vivants automoteurs contenus dans l'une ou plusieurs mangeoires, et
où en particulier les moyens pour maintenir les aliments vivants automoteurs contenus dans l'une ou plusieurs mangeoires comprennent un ou plusieurs moyens sélectionnés parmi une grille (23), un bord avec une section inclinée (29, 30, 32, 34), une section concave (36, 37) comme vue depuis l'intérieur de la mangeoire, une enceinte comestible (38) qui entoure les aliments vivants automoteurs, et une surface intérieure de la mangeoire (41) ayant une structure de surface pour empêcher la montée des aliments vivants automoteurs hors de la mangeoire.

11. Procédé selon la revendication 8, ou la revendication 9 ou 10 lorsqu'elle dépend de la revendication 8,
où la caisse est pourvue d'ouvertures de ventilation (9) sur deux côtés opposés de la caisse afin de permettre au flux d'air à travers la chambre climatique de traverser la caisse.

12. Procédé selon la revendication 8, ou l'une quelconque des revendications 9 à 11 lorsqu'elles dépendent de la revendication 8, comprenant en outre l'étape i) pourvoir un empilement (13) d'un certain nombre desdites caisses.

13. Procédé selon la revendication 8, ou l'une quelconque des revendications 9 à 12 lorsqu'elles dépendent de la revendication 8,
où la chambre climatique comprend un conduit d'alimentation en aliments couplé à des caisses, en particulier à toutes les caisses, et l'étape c) comprend le transport d'aliments vivants automoteurs à travers le conduit d'alimentation en aliments.

14. Procédé selon la revendication 7 ou l'une quelconque des revendications 8 à 13 lorsqu'elles dépendent de la revendication 7,
où au moins un côté de la chambre climatique ou de l'au moins un compartiment de chambre est délimité par un échangeur de chaleur (3), et où en particulier la chambre climatique comprend au moins deux desdits compartiments de chambre (4) qui sont séparés l'un de l'autre par l'échangeur de chaleur.
